# EUROPEAN PATENT SPECIFICATION

(11) **EP 2 218 920 B1**
(45) Date of publication and mention of the grant of the patent: **30.03.2016**
(21) Application number: 10250180.6
(22) Date of filing: 03.02.2010
(51) Int. Cl.: F16B 2/10, F16B 2/22, F16L 55/172

(54) **Remotely operatable fastener**
Fernbedienbares Befestigungsmittel
Fixation pouvant être commandée à distance

(30) Priority: 06.02.2009 GB 0902007
(43) Date of publication of application: 18.08.2010
(73) Proprietor: Crane Ltd., Hitchin Hertfordshire SG4 0UD (GB)
(72) Inventor: Rex, Brian, Hitchin, Hertfordshire SG5 2HH (GB); Harper, Brian, Hitchin, Hertfordshire SG4 0RS (GB)
(74) Representative: Boden, Keith McMurray

(56) References cited:
- DE-A1- 3 807 001
- GB-A- 969 809

## Description

This invention relates to fasteners which can be operated from a remote distance, i.e. without the need for direct handling by an operator. The fasteners have particular application in clamps used in the repair and maintenance of below ground pipes, though other useful applications for the fasteners may well occur to the skilled reader.

### Background

Repair clamps and under pressure tees (UPTs) are used widely in the repair of pipes in a range of pipe sizes, made from a wide variety of materials and carrying a wide variety of media. Examples include, without limitation, water mains, gas supplies and drainage pipe lines.

Hinged repair clamps are known to be used in the repair of pipes in a wide range of sizes and materials carrying a wide variety of mediums. Some examples (without limitation) are gas, drainage and mains supply water. Such repair clamps typically comprise of two or more collar or clamp segments often but not always of metal construction which when in a closed configuration form a cylinder which, in use, embraces a pipe. Typically at least one segment of the clamp is provided with a gasket to seal the damaged pipe under repair. A variety of gasket designs may be used for this purpose, for example but without limitation, the gasket may have any one of a variety of cross sections and be located about just the perimeter of the segments or may be in the form of a mat type seal with any of a number of surface profiles which engages with the entire pipe surface beneath the clamp.

The clamp segments are connected to one another to form the cylinder using fasteners or other tightening means at lugs located at the circumferential ends of each segment which serve to energise and compress the gasket creating a seal around the damaged pipe portion or join.

In some products, the clamp segments have hinges between segments to facilitate assembly to the pipe requiring fewer fasteners to complete the gasket compression.

In these hinged clamps, typical fastener means comprise conventional bolt, nut, and washer assemblies located in bolt lugs of well known design. When assembling these clamps about the target pipe it is necessary to disengage and remove one or more nut and bolt pairs at one or more lugs to allow the clamp to be opened and the clamp to be positioned over the pipe. When the clamp is in position, the nut and bolt fasteners are re-engaged and tightened, closing the clamp, sealing the gasket tightly to the pipe and securing the clamp in its final position.

In other known clamp products, fasteners may be configured to remain in place on a clamp segment during assembly of the clamp. When assembling these clamps over pipes, fasteners are configured such that the operator can swing the fastener radially outwardly of the clamp to facilitate opening and closing of the clamp. When the clamp is closed, the fastener is moved radially inwardly into position over the opposing clamp lug and can then be tightened, sealing the gasket and securing the clamp in position.

All the prior art clamp designs known to the inventor require some degree of disengagement or disassembly and re-engagement or reassembly of one or more fasteners by hand in order to position and secure the clamp about the target pipe portion or join.

There is increasing desire to reduce excavation size and consequent cost and disruption to public services during pipe maintenance. Repair and maintenance systems which require manual intervention on installation necessarily require a minimum excavation size to permit access for the operator to provide the necessary manual intervention. The present invention aims to provide a solution to this problem.

DE-A-3807001 discloses a device for connecting two workpieces which contain through-passages which can be superimposed, having a screw/nut arrangement which can be guided through the through-passages.

### Invention

In accordance with the present invention there is provided a retainer clip for retaining a bolt and nut assembly in position on a lug whilst allowing some reversible movement of the bolt and nut assembly with respect to the lug, the retainer clip being formed from a resiliently deformable material, and comprising locating means for locating on a lug, a clamping surface dimensionally proportioned for clamping a bolt head or a nut assembled to a bolt against an opposing surface, a bridge extending substantially normally from the clamping surface and terminating in a bolt shank engaging portion configured to engage with a shank of the bolt at a point axially distant from the lug to maintain the bolt shank in a substantially stable axial position in relation to the lug when not under load.

In one preferred embodiment, the bridge and bolt shank engaging portion defines a channel axially aligned with the clamping surface and dimensionally proportioned for receiving an axially distant part of the bolt shank. An arm extends spirally upwardly from the bolt shank engaging portion back towards the clamping surface and is configured, in use, to contact with the underside of a lug onto which the clip and a bolt and nut assembly are fitted.

The material and proportions of the clip are selected to resist axial and radial movement of an assembled nut and bolt located in the clamping surface and channel. Conveniently, the clip may be formed from a single piece of material having suitable resiliency. For example, but without limitation, the clip might be moulded from a suitably resilient plastic material, spring steel nylon or acetal.

For example, for a small bolt size (e.g. m12) the resiliency is selected to provide resistance to a turning moment of at least 0.3Nm, for a larger bolt size (eg. m16) for larger sizes (m16) the resiliency is selected to provide resistance to a turning moment of at least 0.5Nm although the resistance will depend also on the bolt mass and its length.

In use, the clamping surface is desirably located on an outwardly facing surface of a lug and can be configured to retain a bolt head or a nut threaded to a bolt. The bridge extends to the other side of the lug and provides an obstruction along an axial length of the bolt shank which extends through the lug. The bridge and bolt shank engaging portion may define a channel though which the bolt shank passes, the bolt engaging portion at least partially encircling the bolt shank. The bridge and arm material and dimensions are selected to allow a required deflection of the bolt shank from its correct axial alignment with the lug without permanently deforming of the clip so that the clip can recover and force the bolt shank back into its correct axial alignment once it has been properly located in a lug pair.

The proportions of the various clip components eg thickness, width and developed length can be calculated using simple beam, cantilever and/or torsion theory when the material mechanical properties are known. For most practical uses envisaged by the inventor, the minimum force to be exerted by the clip at location 4a is = 0.5Nm / (axial displacement from clip contact point 4a and the bolt axis). The greater the axial displacement of the contact point from the bolt axis the smaller the clip force needs to be. Knowing the target moment the engineer has the choice of arm proportions which can deliver the required resistance force using the above theories.

Desirably the clamping surface is relatively more rigid than the second, i.e. it holds the nut and bolt assembly more securely at the nut or bolt head than the channel does at the axially distant position on the bolt shank. This allows the bolt shank more easily to be pivoted about the retained nut or bolt head without disengagement from the lug.

In one embodiment, the bolt engaging portion extends around a substantial part of the bolt shank to form a channel but does not completely encircle it. In use, when under load, the channel wall deforms allowing axial and radial movement of the retained nut and bolt assembly. The resiliency of the clip material should be sufficient as a minimum to counteract radial and axial movement of a retained nut and bolt assembly caused by gravity such that when external factors no longer force the axial or radial movement of the bolt shank, the shank is returned to its stable starting position.

The clamping surface optionally is provided with a through channel configured to receive a bolt shank threaded through a clamped nut. Optionally, the through channel extends to provide a boss which is a snug fit for the emerging shank of a bolt threaded there through.

In another aspect, there is provided a fastening assembly comprising a retainer clip in accordance with the invention in combination with a nut and bolt, the nut bolt and clip being configured to be assembled together in a snug fit about a common lug. In one option, the clamping surface of the clip and the bolt head or nut may be of complementing shape selected to provide rotational resistance. For example the clamping surface and complementing nut or bolt head may be square. In such an arrangement, the clamping surface may include one or more axially extending walls to embrace the perimeter of the complementing nut or bolt head

The assembly has particular application (but is not restricted in use to) in the remote installation of repair clamps and UPTs. In another aspect, therefore, the invention provides a clamp having an open end provided with one or more lugs, the one or more lugs being provided with fastening assembly in accordance with the previous aspect, the retainer clip being configured to fasten securely to the lug. The lug and/or the retainer clip may be adapted to improve security of the fit between them.

### Description

Some embodiments of the invention will now be further described with reference to the accompanying figures in which:
Figure 1 illustrates a clamp provided with two fastening assemblies in accordance with the invention.
Figure 2 illustrates one embodiment of a retainer clip in accordance with the invention.
Figure 3 illustrates a novel nut for use in a fastening assembly in accordance with the invention.
Figures 4A and 4B illustrate the temporary distortion of the retainer clip of Figure 2 when an inserted nut and bolt assembly is subjected to an external axial/radial load.

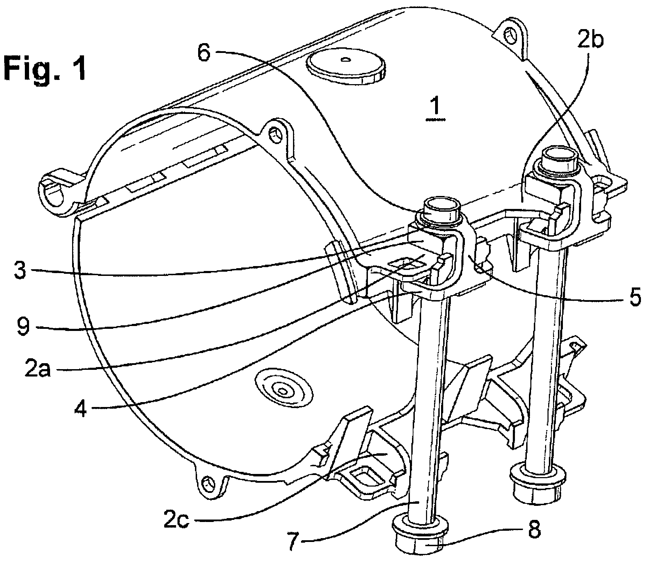

As can be seen from Figure 1, a clamp generally designated as 1 has an open end terminating in two lugs 2a, 2b over which is positioned a retainer clip 3, 4, 5, 6 through which passes the shank 7 of bolt 7,8 which terminates in a bolt head 8. The shank 7 extends through an extended boss 6 of the retainer clip 3,4,5,6. Clamping surface 3 of the clip urges the nut 9 against the lug 2a.

The retainer clip comprises a clamping surface 3 and a channel defined by bolt shank engaging portion 4 through which the shank 7 of the bolt passes. A bridge 5 connects the clamping surface 3 and bolt shank engaging portion 4. A nut 9 is received between the clamping surface 3 and the lug 2a. The nut 9 is threaded onto the shank 7 before being located by the clamping surface 3. The clamping surface 3 and channel are connected by a bridge 5 of the clip which is proportioned to extend from one surface of the lug 2a to the opposite surface.

Part of the bolt shank engaging portion 4 spirals 4a radially inwardly toward the bolt shank 7 and axially towards the facing surface of the lug 2a and through elastic deformation, assists in retaining the nut 9, bolt 7, 8 and clip 3,4,5,6 assembly on the lug 2a. This geometry may be mirrored on an oppositely facing part of the bolt shank engaging portion 4.

At an end distant from the located nut 9 and clip 3,4,5,6, the bolt terminates in a bolt head 8. The bolt shank 7 extends past a second mating lug 2c on an opposing end of the clamp 1. In use, once in position about a pipe, the bolt shank 7 locates in lug 2c and the nut and bolt assembly 7,8,9 can be tightened to secure the clamp 1 in position.

During assembly of the clamp 1 to a pipe (not shown) in a remote (e.g. below ground) location, the fastening assembly is radially displaced which allows the mating clamp lug 2c to pass by as the clamp 1 is closed, then as a consequence of the resilience of the clip 3,4,5,6 springs back behind the lug 2c when the bolt is released locating the shank 7 and preventing disengagement of the clamp 1. The bolt lug 2c and bolt is positioned below the target pipe as the clamp is wrapped around the target pipe. In this configuration, the weight of the nut and bolt of the assembly will tend to prevent the bolt shank 7 from engaging in the lug 2c due to gravity.

The nut is rotationally and axially fixed to the lug 2a by the clip 3,4,5,6, though it is to be appreciated, the position of the nut and bolt assembly could be reversed such that the bolt head 8, rather than the threaded nut be fixed in position by the clip 3,4,5,6 either to lug 2a or mating lug 2c.

The clamping surface 3 provides axial clamping of the nut 9 and the bridge 5 provides a bias on the nut 9 and/ or bolt shank 7 to push the bolt 7, 8 radially inwards towards the centre axis of the clamp 1. The nut 9 is supported on two opposing sides, on one side by the bridge piece 5 and on the other by pillar 10 which extends down the side of the nut 9 on the opposite side to the bridge. Extending the length of the pillar 10 beyond the depth of the nut 9 can provide additional bias on the bolt shank 7 towards the centre axis of a clamp which the clip, nut and bolt assembly is being used to fasten together. Extending the pillar length tends to tilt the clamping surface 3 and consequently the bolt shank 7 beyond a plane normal to the lug face and towards the clamp axis. This feature is important in some applications, for example in a case where there is a relatively large separation between clamp lugs when a clamp is wrapped around a target pipe.

The clip 3,4,5,6 is manufactured from a resiliently deformable material such as a resiliently deformable plastic or spring steel. This serves to force the bolt shank 7 towards the centre axis of the clamp 1 when not obstructed by an external force. When the clamp 1 is open, the lug 2c or another extending surface of the clamp 1 end serves to push the bolt shank 7 away (radially outwardly) from the neutral position. When the clamp closes, the resilience in the clip 3, 4, 5, 6 urges the bolt shank 7 to spring back (radially inwardly) and locate in the mating lug 2c of the opposing clamp segment.

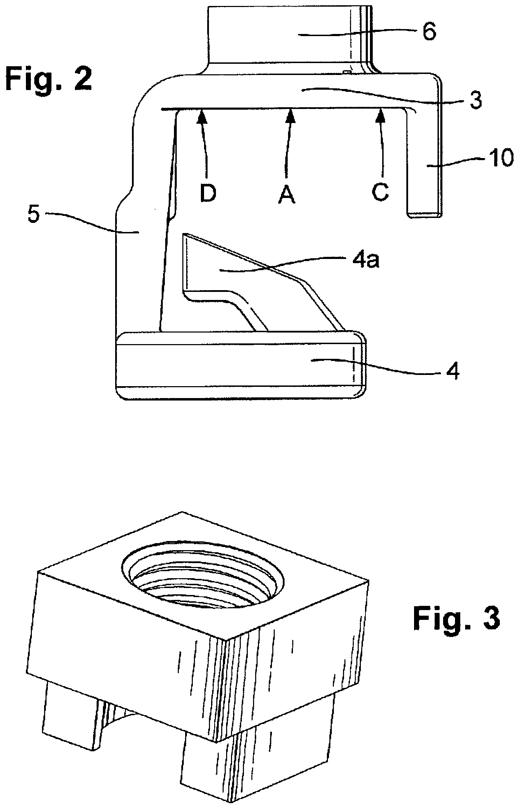

The reaction of the clip 3, 4, 5, 6 is now better described with reference to Figure 2.

In this version of the clip the nut (not shown) is located between clamping surface 3 and the upper face of the bolt lug (not shown). In this assembled position arm 4a is elastically deformed by the underside of the clamp lug (not shown) to provide a spring like clamping force to locate the nut.

In use a bolt (not shown) is threaded from beneath a located nut and through the nut to penetrate partially or wholly the cylindrical boss 6 on top of the clip.

The boss 6 is desirably an intimate fit with the threaded bolt shank 7 thereby to provide increased positional control of the bolt shank 7. (It is to be appreciated that the fit of a bolt thread within a complementing nut thread can have excessive clearance which allows the bolt to move in relation to the nut, such movement can be a hindrance when trying to locate and assemble a clamp about a pipe).

The bolt is deflected from its neutral position during the closing of the clamp. This urges the bolt and clip to radially outward.

As this radially outward movement occurs, clip position C will substantially maintain its axial position with respect to the opposing clamp lug face. Position D of the clip will be urged axially vertically upwards away from the lug face. Simultaneously, arm (or pair of arms) 4a becomes increasingly distorted as it bears harder on the underside of the clamp lug. This distortion of arm or arms 4a urges the bolt to return to its neutral position once the displacement force is removed.

The described arrangement is advantageous in that clamp segments are able to be connected remotely since no manual intervention is needed to position the fasteners and lugs. With the clamp in position, a clamp operator is able to tighten the already located fastener assembly by employing, for example, an extended socket spanner to the bolt head. Since the nut is rotationally and axially fixed in position, there is no need for a second spanner on the nut.

The radial positioning of the nut can be even better secured by the incorporation of one or more optional design improvements. For example, a recess may be provided in the upper surface of the clamp lug, the recess being shaped to complement the shape of the nut. The nut then sits in the recess the walls of which resist rotational movement of the nut.

In alternative embodiment, the nut may be formed in a shape which creates a rotational resistance of the nut when located, for example, in a pocket or against a web or other obstruction of either the clip or clamp lug. Figure 3 illustrates a nut designed to be located in or against a suitable pocket, web or other obstruction. As can be seen, the nut is provided with a substantially square head. Since the dimension of the nut head from a corner to a corner is substantially greater than along the length of a side of the square, when aligned with an edge against an obstruction, the shape of the nut and obstruction resists radial movement of the nut.

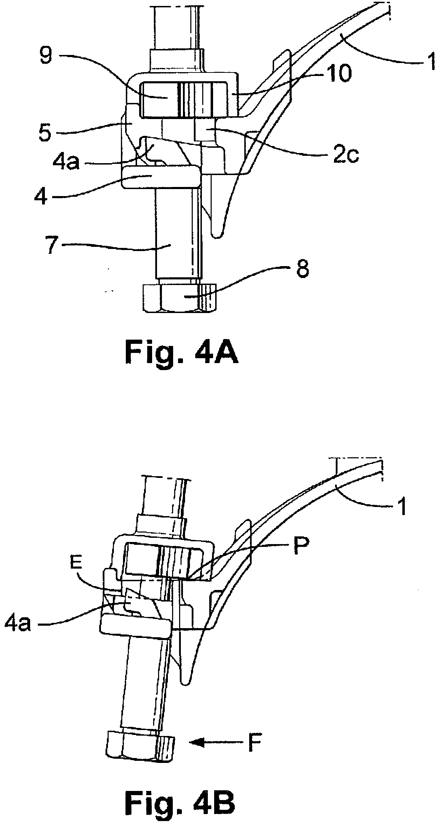

Figures 4A and 4B show the distortion of the clip 3, 4, 4a, 5, 6 as an inserted bolt 7, 8 and nut 9 assembly are subjected to an external force during positioning of a clamp 1 about a target pipe (not shown). Force F represents an external force such as an opposing of a clamp which is being drawn under the bolt 7, 8 to close the clamp 1 around the pipe. The force causes the nut and bolt assembly 7, 8, 9 to pivot about point P which causes arm 4a to be driven against a surface of the lug 2c. Since the material of the clip is elastically deformable, it distorts to allow the bolt and nut assembly 7, 8, 9 to be temporarily moved out of axial alignment with lug 2c, When the load F is removed, for example when the clamp has been closed and the bolt shank 7 located in opposing lug 2c, the clip springs back to its original shape returning the bolt shank 7 into axial alignment with the lug 2a

## Claims

1. A retainer clip for retaining a bolt and nut assembly (7, 8, 9) in position on a lug (2a, 2b) whilst allowing some reversible movement of the bolt and nut assembly (7, 8, 9) with respect to the lug (2a, 2b), the retainer clip being formed from a resiliently deformable material, and comprising locating means for locating on a lug (2a, 2b), a clamping surface (3) dimensionally proportioned for clamping a bolt head (8) or a nut (9) assembled to a bolt (7, 8) against an opposing surface, and a bridge (5) extending substantially normally from the clamping surface (3);
**characterised by**:
the bridge (5) terminating in a bolt shank engaging portion (4) configured to engage with a shank (7) of the bolt (7, 8) at a point axially distant from the lug (2a, 2b) to maintain the bolt shank (7) in a substantially stable axial position in relation to the lug (2a, 2b) when not under load.

2. A retainer clip as claimed in claim 1, wherein the clip is formed from a single piece of suitably resilient material.

3. A retainer clip as claimed in claim 1 or 2, wherein the clip is configured to retain a bolt (7, 8) of m12 size and the resiliency of the clip material is selected to provide resistance to a turning moment of at least 0.3 Nm.

4. A retainer clip as claimed in claim 1 or 2, wherein the clip is configured to retain a bolt (7, 8) of m16 size and the resiliency of the clip material is selected to provide resistance to a turning moment of at least 0.5 Nm.

5. A retainer clip as claimed in any of claims 1 to 4, wherein the bridge (5) and the bolt shank engaging portion (4) define a channel dimensionally proportioned for receiving an axially distant part of the bolt shank (7).

6. A retainer clip as claimed in claim 5, wherein an arm (4a) extends spirally upwardly from the bolt shank engaging portion (4) back towards the clamping surface (3) and is configured, in use, to contact with the underside of the lug (2a, 2b) radially outwardly of the bolt axis onto which the clip and the bolt and nut assembly (7, 8, 9) are fitted.

7. A retainer clip as claimed in any of claims 1 to 6, wherein the clamping surface (3) is provided with a through channel configured to receive a nut (9) threaded onto the bolt shank (7) and the wall defining the through channel extends to provide a boss (6) which is a snug fit for the emerging shank (7) of the bolt (7, 8) threaded therethrough.

8. A fastening assembly comprising a retainer clip in accordance with any of claims 1 to 7 in combination with a nut (9) and a bolt (7, 8), the nut (9) and the bolt (7, 8) and the clip being configured to be assembled together in a snug fit about a common lug (2a, 2b).

9. A fastening assembly as claimed in claim 8, wherein the clamping surfaces (3) of the clip and the bolt head (8) or the nut (9) are of complementing shape selected to provide rotational resistance therebetween.

10. A fastening assembly as claimed in claim 9, wherein the complementing nut (9) or bolt head (8) is substantially square and the clamping surface (3) includes one or more axially extending walls (10) to embrace the perimeter of the complementing nut (9) or bolt head (7, 8).

11. A clamp having an open end provided with one or more lugs (2a, 2b), the one or more lugs (2a, 2b) being provided with a fastening assembly in accordance with any of claims 8 to 10, and the retainer clip being configured to fasten securely to the respective lug (2a, 2b).

## Patentansprüche

1. Halteclip zum Sichern eines Schrauben- und Mutter-Aufbaus (7, 8, 9) in einer Position auf einem Büge1 (2a, 2b), während eine reversible Bewegung des Schrauben-und Mutter-Aufbaus (7, 8, 9) in Bezug zu dem Bügel (2a, 2b) etwas erlaubt wird, worin der Halteclip aus einem federnd verformbaren Material ausgebildet ist und umfasst, Anordnungsmittel zum Anordnen auf einem Bügel (2a, 2b), eine Einspannfläche (3), die in ihren Abmessungen zum Klemmen eines Schraubenkopfs (8) oder einer auf einer Schraube (7, 8) angebrachten Mutter (9) gegen eine Auflageoberfläche bemessen ist, und eine Brücke (5), die sich im Wesentlichen normal von der Einspannfläche (3) erstreckt;
**dadurch gekennzeichnet, dass**
die Brücke (5) in einem Schraubenschaft-Eingriffsbereich (4) endet, der ausgestaltet ist, mit einem Schaft (7) der Schraube (7, 8) an einem Punkt axial entfernt von dem Bügel (2a, 2b) in Eingriff zu kommen, um den Schraubenschaft (7), wenn nicht unter Last befindlich, in einer im Wesentlichen stabilen axialen Position in Bezug zu dem Bügel (2a, 2b) zu halten.

2. Halteclip nach Anspruch 1, worin der Clip aus einem einzigen Stück eines geeigneten elastischen Materials ausgebildet ist.

3. Halteclip nach einem der Ansprüche 1 oder 2, worin der Clip ausgestaltet ist, eine Schraube (7, 8) der Größe M12 zu halten und die Elastizität des Clipmaterials ausgewählt ist, um einen Widerstand gegen ein Drehmoment von mindestens 0,3 Nm zu liefern.

4. Halteclip nach Anspruch 1 oder 2, worin der Clip ausgestaltet ist eine Schraube (7, 8) der Größe M16 zu halten und die Elastizität des Clipmaterials ausgewählt ist, um einen Widerstand gegen ein Drehmoment von mindestens 0,5 Nm zu liefern.

5. Halteclip nach einem der Ansprüche 1 bis 4, worin die Brücke (5) und der Schraubenschah-Eingriffsbcrcich (4) einen Kanal definierten, der in seinen Abmessungen zur Aufnahme eines axial entfernten Teils des Schraubenschafts (7) bemessen ist.

6. Halteclip nach Anspruch 5, worin sich ein Arm (4a) von dem Schraubenschaft-Eingriffsbereich (4) zurück zu der Einspannfläche (3) schraubenförmig nach oben erstreckt und ausgestaltet ist, bei Verwendung mit der Unterseite des Bügels (2a, 2b) radial außerhalb der Schraubenachse, auf die der Clip und der Schrauben- und Mutter-Aufbau gepasst sind, in Kontakt zu treten.

7. Halteclip nach einem der Ansprüche 1 bis 6, worin die Einspannfläche (3) mit einem Durchgangsloch versehen ist, das ausgestaltet ist, eine Mutter (9) aufzunehmen, die auf den Schraubenschaft (7) aufgeschraubt ist, und worin die das Durchgangsloch definierende Wand sich unter Bereitstellung eines Ansatzes (6) erstreckt, der für den hervorstehenden Schaft (7) der dadurch geschraubten Schraube (7, 8) einen Passitz liefert.

8. Befestigungs-Aufbau, welcher einen Halteclip gemäß einem der Ansprüche 1 bis 7 in Kombination mit einer Mutter (9) und einer Schraube (7, 8) umfasst, worin die Mutter (9) und die Schraube (7, 8) und der Clip ausgestaltet sind, zusammen in einem Passitz um einen gemeinen Bügel (2a, 2b) aufgebaut zu werden.

9. Befestigungs-Aufbau nach Anspruch 8, worin die Einspannflächen (3) des Clips und der Schraubenkopf (8) oder die Mutter (9) eine komplementierende Form aufweisen, die derart ist, um einen Drehwiderstand dazwischen zu liefern.

10. Befestigungs-Aufbau nach Anspruch 9, worin die komplementierende Mutter (9) oder der Schraubenkopf (8) im Wesentlichen rechteckig sind und die Einspannfläche (3) ein oder mehrere axial sich erstreckende Wandungen (10) umfasst, um den Umfang der komplementierenden Mutter (9) oder des Schraubenkopfs (7, 8) zu umgeben.

11. Klemme mit einem offenen Ende, die mit einem oder mehreren Bügeln (2a, 2b) ausgestattet ist, worin die einen oder mehreren Bügel (2a, 2b) mit einem Befestigungs-Aufbau gemäß einem der Ansprühen 8 bis 10 versehen ist, und worin der Halteclip ausgestaltet ist, an dem entsprechenden Büge1 (2a, 2b) fest befestigt zu werden.

## Revendications

1. Pince de retenue destinée à maintenir un ensemble boulon et écrou (7, 8, 9) en position sur une oreille (2a, 2b) tout en permettant un certain déplacement réversible de l'ensemble boulon et écrou (7, 8, 9) par rapport à l'oreille (2a, 2b), la pince de retenue étant constituée d'un matériau élastiquement déformable, et comprenant un moyen de positionnement en vue d'un positionnement sur une oreille (2a, 2b), une surface de serrage (3) aux dimensions proportionnées destinée à serrer une tête de boulon (8) ou un écrou (9) assemblé à un boulon (7, 8) contre une surface opposée, et un pont (5) s'étendant de manière sensiblement perpendiculaire depuis la surface de serrage (3) ;
**caractérisée en ce que** :
le pont (5) se termine dans une partie d'entrée en prise avec tige de boulon (4) conçue pour entrer en prise avec une tige (7) du boulon (7, 8) au niveau d'un point axialement distant de l'oreille (2a, 2b) afin de maintenir la tige (7) de boulon dans une position axiale sensiblement stable par rapport à l'oreille (2a, 2b) lorsqu'elle ne se trouve pas sous charge.

2. Pince de retenue selon la revendication 1, dans laquelle la pince est constituée d'un seul morceau de matériau à élasticité appropriée.

3. Pince de retenue selon la revendication 1 ou 2, dans laquelle la pince est conçue pour retenir un boulon (7, 8) de taille m12 et l'élasticité du matériau de la pince est choisie pour offrir une résistance à un moment de rotation d'au moins 0,3 Nm.

4. Pince de retenue selon la revendication 1 ou 2, dans laquelle la pince est conçue pour retenir un boulon (7, 8) de taille m16 et l'élasticité du matériau de la pince est choisie pour offrir une résistance à un moment de rotation d'au moins 0,5 Nm.

5. Pince de retenue selon l'une quelconque des revendications 1 à 4, dans laquelle le pont (5) et la partie d'entrée en prise avec tige de boulon (4) délimitent un canal aux dimensions proportionnées destiné à recevoir une partie axialement distante de la tige de boulon(7).

6. Pince de retenue selon la revendication 5, dans laquelle un bras (4a) s'étend en spirale vers le haut depuis la partie d'entrée en prise avec tige de boulon (4) de retour vers la surface de serrage (3) et est conçu pour, lors de l'utilisation, entrer en contact avec le dessous de l'oreille (2a, 2b) radialement vers l'extérieur de l'axe de boulon, sur laquelle sont montés la pince et l'ensemble boulon et écrou (7, 8, 9).

7. Pince de retenue selon l'une quelconque des revendications 1 à 6, dans laquelle la surface de serrage (3) est pourvue d'un canal traversant conçu pour recevoir un écrou (9) fileté sur la tige (7) de boulon et la paroi délimitant le canal traversant s'étend jusqu'à offrir un bossage (6) qui est un ajustement serré pour la tige (7) émergente du boulon (7, 8) filetée dans celui-ci.

8. Ensemble de fixation comprenant une pince de retenue selon l'une quelconque des revendications 1 à 7 en combinaison avec un écrou (9) et un boulon (7, 8), l'écrou (9) et le boulon (7, 8) ainsi que la pince étant conçus pour être assemblés ensemble dans un ajustement serré autour d'une oreille commune (2a, 2b).

9. Ensemble de fixation selon la revendication 8, dans lequel les surfaces de serrage (3) de la pince et de la tête de boulon (8) ou de l'écrou (9) sont de forme complémentaire, choisie pour offrir une résistance à la rotation entre elles.

10. Ensemble de fixation selon la revendication 9, dans lequel l'écrou (9) ou la tête de boulon (8) complémentaire est sensiblement carré et la surface de serrage (3) inclut une ou plusieurs parois (10) s'étendant axialement pour encercler l'écrou (9) ou la tête de boulon (8) complémentaire.

11. Elément de serrage possédant une extrémité ouverte pourvue d'une ou de plusieurs oreilles (2a, 2b), la ou les oreilles (2a, 2b) étant pourvues d'un ensemble de fixation selon l'une quelconque des revendications 8 à 10, et la pince de retenue étant conçue pour se fixer solidement à l'oreille respective (2a, 2b).
